# EUROPÄISCHE PATENTSCHRIFT

(11) **EP 0 456 849 B1**
(45) Veröffentlichungstag und Bekanntmachung des Hinweises auf die Patenterteilung: **02.03.1994**
(21) Anmeldenummer: 90109046.4
(22) Anmeldetag: 14.05.1990
(51) Int. Cl.: B60T 13/00

(54) **Hydraulische Bremseinrichtung**
Hydraulic brake installation
Installation hydraulique de freinage

(43) Veröffentlichungstag der Anmeldung: 21.11.1991
(73) Patentinhaber: Noell GmbH, 97080 Würzburg (DE)
(72) Erfinder: Brendecke, Manfred, D-3150 Peine-Vöhrum (DE)
(74) Vertreter: Lüdtke, Frank

(56) Entgegenhaltungen:
- DE-A- 2 340 171
- US-A- 3 973 754

## Beschreibung

Die Erfindung betrifft eine hydraulische Bremseinrichtung für Portalhubfahrzeuge.

Es sind in der Praxis hydraulische Zweikreisbremseinrichtungen bekannt, die auf jeder Fahrwerksseite, und zwar in Nähe der Räder eines Portalhubfahrzeuges mit einer aufwendigen Hydraulikeinheit ausgestattet sind.
Bei diesen Bremseinrichtungen sind etliche Nachteile vorhanden. So sind z. B. insgesamt zwei Hydraulikeinheiten installiert, mit jeweils einem Ölbehälter, einer Hydraulikpumpe und einem elektrischen Pumpenmotor. Es sind ferner für die elektrische Energie sehr lange Zuleitungen vorhanden, die wegen der Spannungsabfälle bei diesen großen Entfernungen auch noch überdimensionale Querschnitte aufweisen.

In der Praxis sind ferner hydraulische Zweikreisbremseinrichtungen bekannt, die anstelle von zwei, mit nur einer Hydraulikeinheit auskommen. Diese, mit einem Ölbehälter, einer Hydraulikpumpe und einem elektrischen Pumpenmotor versehene Hydraulikeinheit befindet sich auf einer Plattform oberhalb des Hubfahrzeugportals.
Bei diesen bekannten Bremseinrichtungen ist von Nachteil, daß eine von der Portalhöhe abhängige statische Ölsäule auf die Bremszylinder einwirkt, wobei der Restdruck eine Kraft in Richtung Bremswirkung hervorruft und einen Belagverschleiß bei den an den Fahrzeugrädern angeordneten hydraulischen Bremsen nach sich zieht.

Der Erfindung liegt die Aufgabe zugrunde, eine hydraulische Bremseinrichtung für Portalhubfahrzeuge zu schaffen, die sich durch eine hohe Wirtschaftlichkeit auszeichnet.

Zur Lösung der Aufgabe geht die Erfindung von einer Bremseinrichtung für Portalhubfahrzeuge mit einem oberhalb des Hubfahrzeugportals befindlichen Hydraulikölbehälter aus. Die Erfindung ist gekennzeichnet durch durch die Merkmale des zweiten Teils des Anspruchs 1.

Durch die Erfindung ergibt sich eine Bremseinrichtung für Portalfahrzeuge, die einfach, betriebssicher und kostengünstig ist.

Vorteilhafte und zweckmäßige Weiterbildungen der Erfindung ergeben sich aus den Unteransprüchen.

Anhand eines Schaltplanes wird ein Ausführungsbeispiel der Erfindung nachstehend näher erläutert.

Mit 1 ist ein oberhalb des Portals eines Hubfahrzeuges befindlicher Hydraulikölbehälter bezeichnet. Bei Absinken des Druckes im Hydraulikölbremskreis nach einem Rückschlagventil 2, wird durch Ansprechen eines Druckschalters 3 mit einem Elektromotor 4 eine Pumpe 5 in Funktion gesetzt, die so lange Hydrauliköl aus dem Behälter 1 in den Bremskreis fördert, bis nach Erreichen eines eingestellten Druckes der Schalter 3 das Antriebsaggregat 4, 5 wieder abschaltet.
Mit der Betätigung der Fahrzeugbremse und somit eines Zweikreisbremsventiles 6, wird proportional zur Betätigungskraft und dem Weg am Bremspedal ein Ansteuerdruck in den Leitungen 7 und 7' erzeugt, der zu den Vorsteueranschlüssen von Relaisventilen 8 und 8' führt. Mit der Betätigung der Relaisventile 8 und 8' werden die Verbindungen zu verschiedenen Bremszylindern 9, 10 und 9', 10' hergestellt und die Bremsung eingeleitet. Mit der Bremsenbetätigung werden gleichzeitig, mit demselben Vorsteuerdruck wie für die Relaisventile 8 und 8', Wegeventile 11 und 11' geschaltet. Dadurch werden die Verbindungen zu den unter Dauerdruck stehenden Leitungen 12 und 12' freigegeben und Hydrauliköl gelangt durch Drosselventile 13 und 13' an Kolben 14 und 14' von Förderelementen 15 und 15'. Mit der Druckbeaufschlagung ist eine Kolbenverschiebung gegen die Kraft von Federn 16 und 16' verbunden, wobei zuvor aus einer von den Bremszylindern 9, 10 und 9', 10' kommenden Ölzulaufleitung 17 und 17' angesaugtes Öl, nunmehr aus einer Zylinderhälfte 18 und 18' heraus und über eine Ölablaufleitung 19 und 19' in den höher gelegenen Hydraulikölbehälter 1 gefördert wird. Mit dem Stoppen des Bremsvorganges durch Verlassen des Bremspedales, begeben sich die Wegeventile 11 und 11' in ihre Ausgangsstellung zurück. Dadurch bedingt werden die Kolben 14 und 14' öldruckentlastet und durch die Rückstellfedern 16 und 16' wieder in ihre Ausgangsstellung zurückgeführt. Zuvor aus einer von den Bremszylindern 9, 10 und 9', 10' kommenden Ölzulaufleitung 20 und 20' angesaugtes Öl, wird nunmehr aus einer Zylinderhälfte 21 und 21' heraus und über eine Ölablaufleitung 22 und 22' in den höher gelegenen Hydraulikölbehälter 1 gefördert.

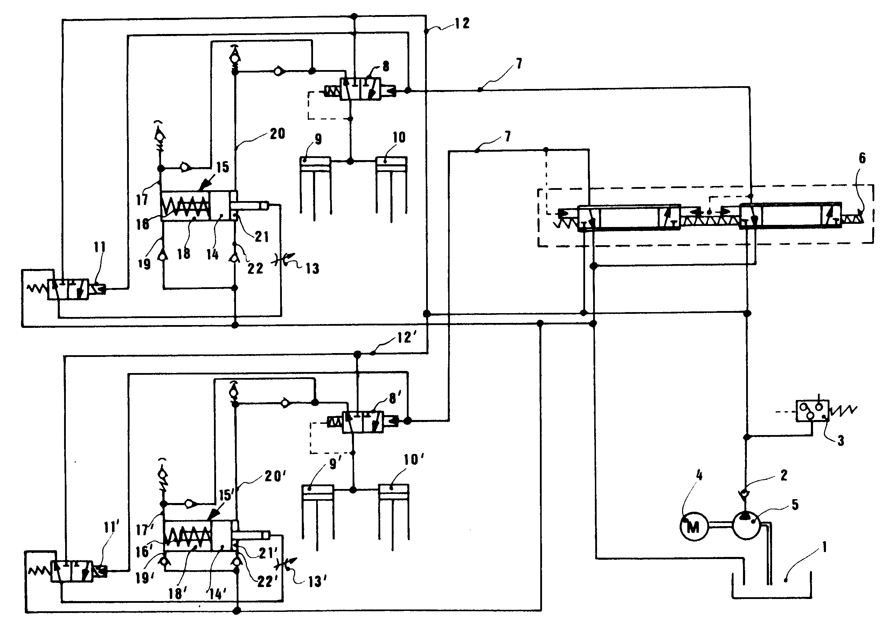

Die Förderelemente 15 und 15' sind im Bereich der Fahrzeugräder am linken und am rechten Fahrträger eines Portalhubfahrzeuges angebracht. Da Portalhubfahrzeuge allgemein bekannt sind, ist ein solches in der Zeichnung nicht dargestellt.

## Patentansprüche

1. Hydraulische Bremseinrichtung für Portalhubfahrzeuge mit einem oberhalb des Hubfahrzeugportals befindlichen Hydraulikölbehälter, gekennzeichnet durch im Bereich der Fahrzeugräder am linken und am rechten Fahrträger des Hubfahrzeugs jeweils ein in den Hydraulikölbremskreis eingesetztes Förderelement (15, 15'), das aus einem Zylinder besteht, der durch einen doppelt wirkenden Kolben (14, 14') in zwei Hälften (18, 21, 18', 21') unterteilt ist, von denen jede einen Hydrauklikölzulauf und einen Hydraulikölablauf aufweist.

2. Hydraulische Bremseinrichtung nach Anspruch 1, dadurch gekennzeichnet, daß die Förderelemente (15, 15') durch Handhabung der Fahrzeugbremse betätigbar sind.

3. Hydraulische Bremseinrichtung nach Anspruch 1 oder 2, dadurch gekennzeichnet, daß die Förderelemente (15, 15') über ein in den Hydraulikölbremskreis eingesetztes schaltbares Ventil (11, 11') betätigbar sind.

4. Hydraulische Bremseinrichtung nach Anspruch 3, dadurch gekennzeichnet, daß zwischen dem Förderelement (15, 15') und dem Ventil (11, 11') ein Drosselventil (13, 13') vorgesehen ist.

## Claims

1. Hydraulic braking means for gantry cranes, having a hydraulic oil tank situated above the crane gantry, characterised by a conveyor element (15, 15'), which is inserted into the hydraulic oil braking circuit and comprises a cylinder, being provided in the region of each of the vehicle wheels on the left-hand travel support and on the right-hand travel support of the crane, said cylinder being divided into two halves (18, 21, 18', 21') by a double-acting piston (14, 14'), each half having a hydraulic oil inlet and a hydraulic oil outlet.

2. Hydraulic braking means according to claim 1, characterised in that the conveyor elements (15, 15') are actuatable by operation of the vehicle brake.

3. Hydraulic braking means according to claim 1 or 2, characterised in that the conveyor elements (15, 15') are actuatable via the intermediary of a switchable valve (11, 11'), which is inserted into the hydraulic oil braking circuit.

4. Hydraulic braking means according to claim 3, characterised in that a throttle valve (13, 13') is provided between the conveyor element (15, 15') and the valve (11, 11').

## Revendications

1. Installation hydraulique de freinage pour véhicules de levage à portique, pourvue d'un réservoir d'huile hydraulique se trouvant au-dessus du portique du véhicule de levage, caractérisée par des éléments de refoulement (15, 15') placés dans le circuit de freinage à huile hydraulique, dans la zone des roues du véhicule, respectivement sur les supports de roulement gauche et droit du véhicule de levage, et constitués chacun par un cylindre divisé par un piston à double action (14, 14'), en deux moitiés (18, 21, 18', 21') pourvues chacune d'une conduite d'arrivée d'huile hydraulique et d'une conduite de décharge d'huile hydraulique.

2. Installation hydraulique de freinage selon la revendication 1, caractérisée en ce que les éléments de refoulement (15, 15') peuvent être commandés par actionnement du frein du véhicule.

3. Installation hydraulique de freinage selon la revendication 1 ou 2, caractérisée en ce que les éléments de refoulement (15, 15') peuvent être commandés par l'intermédiaire d'une soupape commutable (11, 11') placée dans le circuit de freinage à huile hydraulique.

4. Installation hydraulique de freinage selon la revendication 3, caractérisée en ce qu'une soupape d'étranglement (13, 13') est prévue entre l'élément de refoulement (15, 15') et la soupape (11, 11').
